# EUROPEAN PATENT SPECIFICATION

(11) **EP 4 647 241 B1**
(45) Date of publication and mention of the grant of the patent: **09.12.2026**
(21) Application number: 25160024.3
(22) Date of filing: 25.02.2025
(51) Int. Cl.: B29C 63/02, B29C 63/00, B65B 11/02

(54) **APPARATUS FOR APPLYING A FILM TO A SUPPORT**
VORRICHTUNG ZUM AUFBRINGEN EINES FILMS AUF EINEN TRÄGER
APPAREIL POUR APPLIQUER UN FILM SUR UN SUPPORT

(30) Priority: 06.05.2024 IT 202400010117
(43) Date of publication of application: 12.11.2025
(73) Proprietor: G. Mondini SpA, 25033 Cologne (BS) (IT)
(72) Inventor: MONDINI, Paolo Carlo, 25033 Cologne BS (IT); SURACE, Alfonso, 25038 Rovato (BS) (IT)
(74) Representative: Ponchiroli, Simone

(56) References cited:
- EP-A2- 0 569 846
- US-A- 5 326 417
- US-B2- 10 926 899

## Description

This invention relates to an apparatus for applying a film to a support.

The need to apply a film to a support is widespread in various sectors, particularly in that of packaging for which this invention was developed.

For example, a product is often placed on a support and packaged by applying a film to the support, thereby obtaining a package in which the product is enclosed between the film and the support.

Moreover, in the food packaging sector, supports made of cellulose material are often lined with a film before they can be used and receive food products on top of them. For example, this is to make the supports waterproof, to guarantee improved hygienic conditions, or to guarantee improved preservation of a product subsequently packaged on the lined support. Although devised for packaging, in particular for food products, this invention may advantageously be applied in other sectors in which it is necessary to apply a film to a support.

Currently on the market there are various types of apparatuses for applying a film to a support (as a lining for the support in order to obtain a tray or a lid, or as a packaging film for sealing a product on a tray). They usually have a lower supporting member for supporting the support, an upper closing member and film applying means. One prior art type of apparatuses is configured to apply the film in the form of pre-cut sheets, whilst another prior art type of apparatuses is configured to apply the film to the support starting from a web of material and to cut the film from the web after application (typically by means of a cutting die which descends from the upper closing member). The latter type of apparatuses generally allows easier obtainment of a support or a final package with a smaller quantity of excess film relative to the outer edge of the support. The nearer to the outer edge the cutting die can cut the film, the smaller the quantity of excess film there is from the outer edge of the final support. In order to allow that result to be achieved, the latter type of apparatuses have one or more centring elements for centring the support relative to the cutting die and avoiding the risk of cutting the support with the cutting die. A common prior art technical solution involves making inclined walls in the lower supporting member (as disclosed for example in US 10 926 899 B2 wherein, moreover, an actuator is connected to the cutting die and the cutting die is movable by means of the actuator along a straight line of movement which is vertical), for guiding the support onto a surface which is shaped to match the lower profile of the support so as to keep the support in a centred position relative to the cutting die. However, with flat supports without lateral walls, the (flat) surface cannot guarantee optimum centring of the support during application of the film, and the cutting die must therefore be further from the outer edge of the support (to avoid cutting the support), the consequence being a greater overall quantity of excess film from the outer edges of the support.

Therefore, the prior art has several disadvantages, and the technical purpose which forms the basis of this invention is to at least partly overcome them.

In particular, the technical purpose of this invention is to obtain an apparatus for applying a film to a support, in particular flat and without lateral walls, which allows precise centring of the support during use.

The technical purpose of this invention is also to obtain an apparatus for applying a film to a support having relatively simple construction and operation in terms of centring of the supports.

The technical purpose is substantially achieved by an apparatus for applying a film to a support in accordance with what is defined in independent claim 1. Particular embodiments of this invention are defined in the corresponding dependent claims.

Further features and the advantages of this invention will be more apparent from the detailed description of several preferred, non-limiting embodiments, of an apparatus for applying a film to a support.

Reference will be made to the drawings of the appended plates, in which:
- Figure 1 is an axonometric view of a preferred embodiment of the apparatus according to this invention;
- Figure 2 is an enlarged view of the detail II of Figure 1;
- Figure 3 shows the part of the apparatus of Figure 2 following a first sequence of movement of some of its elements;
- Figure 4 shows the part of the apparatus of Figure 3 following a second sequence of movement of some of its elements;
- Figure 5 is an axonometric vertical section of the part of the apparatus of Figure 4;
- Figure 6 is a front view of the part of the apparatus of Figure 5;
- Figure 7 shows, in an axonometric view and isolated, a cutting die, a plurality of centring elements and an actuator of the apparatus of Figure 1;
- Figure 8 shows, in an axonometric vertical section, the cutting die, the plurality of centring elements and the actuator of Figure 7;
- Figure 9 shows the part of the apparatus of Figure 5 following a third sequence of movement of some of its elements;
- Figure 10 is a front view of the apparatus of Figure 9;
- Figure 11 is an axonometric view not in cross-section of the apparatus of Figure 9 following a fourth sequence of movement of some of its elements;
- Figure 12 shows the apparatus of Figure 11 following a fifth sequence of movement of some of its elements;
- Figure 13 is an axonometric cross-section of the apparatus of Figure 12;
- Figure 14 shows the apparatus of Figure 13 following a sixth sequence of movement of some of its elements;
- Figure 15 shows the apparatus of Figure 14 following a seventh sequence of movement of some of its elements;
- Figure 16 is a front view of the apparatus of Figure 15;
- Figure 17 is an enlarged view of the detail XVII of Figure 16;
- Figure 18 shows the apparatus of Figure 15 following an eighth sequence of movement of some of its elements;
- Figure 19 shows the apparatus of Figure 18 following a ninth sequence of movement of some of its elements;
- Figure 20 is a front view of the apparatus of Figure 19;
- Figure 21 is an enlarged view of the detail XXI of Figure 20.

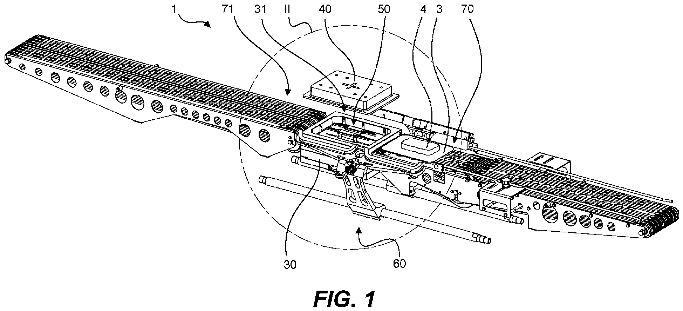

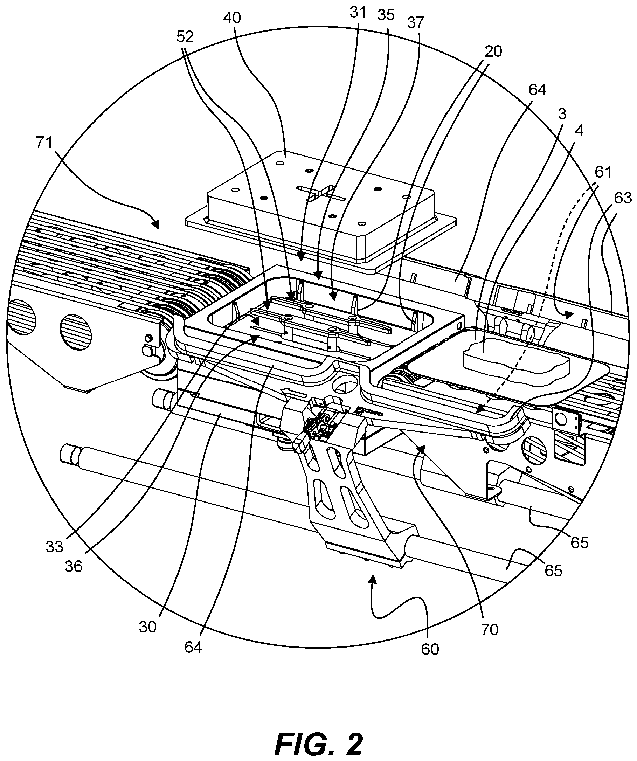

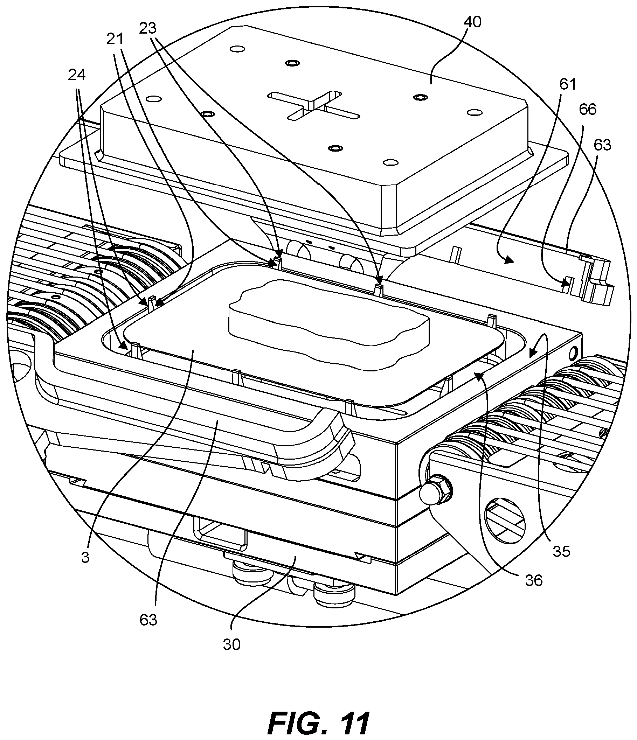

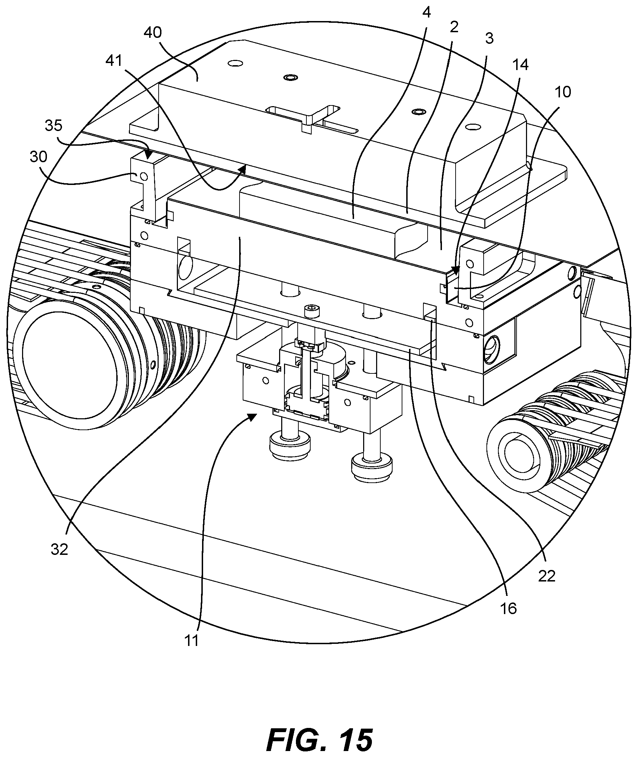

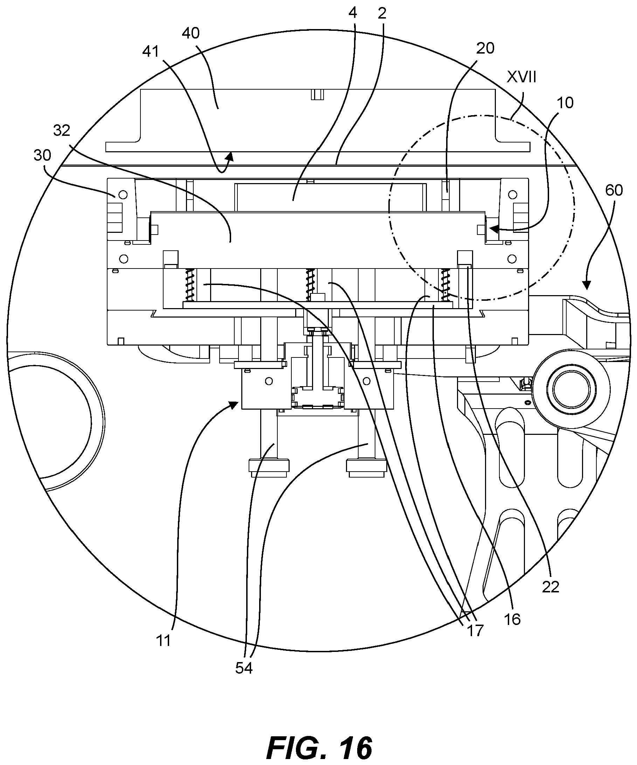

In the accompanying figures, the apparatus for applying a film to a support according to this invention was globally labelled with the number 1. It may be used to make a tray or a lid by applying the film 2 to the support 3, or for packaging a product 4 placed on a tray constituted of the support 3. It should be noticed that in the figures for illustrative clarity the film 2 is shown only in Figures 15 to 21, but in reality it is advantageously present even in the situations illustrated in Figures 1 to 6 and 9 to 14.

Although initially developed for applying a film 2 to a support 3 which is flat and without lateral walls (case illustrated in the accompanying figures), this invention is also applicable to supports 3 which are not flat and/or which have lateral walls (with or without an upper flange). It should also be noticed that "film" means a layer of thin material applicable to the upper part of the support 3 (the part directed towards the product 4) by the action of heat and/or pressure and/or by means of adhesion (intrinsic to the material itself or due to an adhesive). The film 2 may be made of thermoformable material (typically polyethylene, polypropylene, polyethylene terephthalate) or non-thermoformable material (for example aluminium, or a multi-layer material comprising aluminium and/or a cellulose material and/or one or more polymeric materials). The film 2 may further comprise a layer of EVOH (ethylene vinyl alcohol) or of another material which is a barrier to oxygen. In general, the support 3 may be made of any material. In some cases, the support 3 is constituted of materials comprising, in general, cellulose. For example, the support 3 may be constituted of a paper and cardboard industry article, that is to say, a cellulose material-based article (such as paper, cardboard or paperboard). In other embodiments, the support 3 may be constituted of different materials, for example a plastic/polymeric material-based article (for example selected from the group consisting of: polyolefins, preferably polyethylene; ionomers; polyesters, preferably polyethylene terephthalate) or of a metal material-based article (such as aluminium). It is also possible for the support 3 to be constituted of an article based on multiple different materials (such as, for example, both cellulose material and plastic material). The support 3 may further comprise a layer of EVOH or of another material which is a barrier to oxygen.

It should be emphasised that the support 3 may be constituted of a single sheet folded and/or shaped and/or glued on itself, or of two or more sheets folded and/or shaped and/or glued or constrained to each other. It is therefore possible either for the support 3 to have a single layer, or for the support 3 to have a plurality of layers (which may be made of the same material or of materials which are different from each other).

Moreover, this invention is not limited even by the type of support 3, since it may be transparent, coloured, printed, with text, with windows and so on. Moreover, the support may have a single compartment or multiple compartments.

In general, in accordance with the main innovative aspect of this invention, the apparatus 1 comprises a cutting die 10 for cutting the film 2 and a plurality of centring elements 20 for centring the support 3 in the cutting die 10 before using the cutting die 10 to cut the film 2 applied to the support 3. The apparatus 1 further comprises an actuator 11 (advantageously a linear actuator 11) which is connected to the cutting die 10: by means of the actuator 11, the cutting die 10 is movable along a straight line of movement which is vertical.

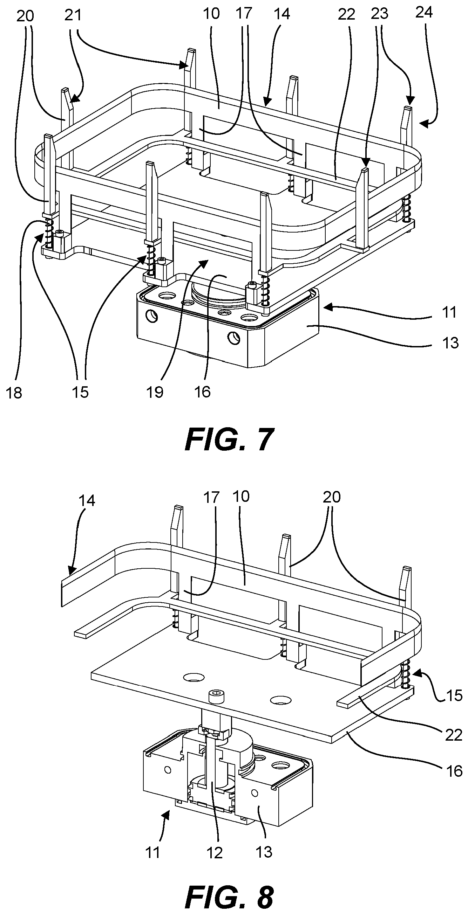

Figure 7 illustrates the cutting die 10, the actuator 11 and the plurality of centring elements 20 in accordance with a preferred embodiment of the apparatus 1; those elements are also illustrated in a vertical section view in Figure 8.

The cutting die 10 is movable along the straight line of movement in a first direction of movement, for cutting the film 2, and in a second direction of movement which is opposite to the first direction of movement. The cutting die 10 has a cutting edge 14 and, in plan view, defines a closed line which, in use, advantageously circumscribes the shape in plan view of the support 3 except for a play (minimum, preferably between 0.2 mm and 0.5 mm on each side) so that it allows insertion of the support 3 inside the cutting die 10 before application of the film 2. In the embodiment illustrated, the cutting edge 14 is contained in a horizontal plane and the cutting die 10 defines in plan view a closed line in the shape of a rectangle with rounded corners (that is to say, substantially the same shape as the support 3 to be used).

The plurality of centring elements 20 is arranged around the cutting die 10. In detail, the plurality of centring elements 20 is arranged, in plan view, outside the closed line defined by the cutting die 10 with the centring elements 20 distributed around the cutting die 10 (preferably equally spaced out). Advantageously, each centring element 20 is at a minimum distance from the cutting die 10 (advantageously roughly several tenths of a millimetre) and has an inclined surface 21 directed inwards, with the inclined surfaces 21 (of the plurality of centring elements 20) converging towards the centre, moving towards the cutting die 10.

The plurality of centring elements 20 is slidably constrained to the cutting die 10 between a first position and a second position along a straight line of relative translation; the first position and the second position are two end of stroke positions along the straight line of relative translation. Relative to the cutting die 10, the plurality of centring elements 20 may therefore move between the first position and the second position along the straight line of relative translation, which is integral with the cutting die 10. Along the straight line of relative translation, the plurality of centring elements 20 is slidable in a first direction of sliding, in which it moves towards the first position, and in a second direction of sliding, in which it moves towards the second position. The straight line of relative translation is parallel to the straight line of movement of the cutting die 10 and is therefore also vertical. Vertically, the first direction of sliding (of the plurality of centring elements 20 relative to the cutting die 10) and the first direction of movement (of the cutting die 10 relative to the apparatus 1) are either both directed upwards (as in the embodiment illustrated) or both directed downwards (embodiment not illustrated); similarly, the second direction of sliding and the second direction of movement are respectively both directed downwards or both directed upwards. At least in the first position, the plurality of centring elements 20 projects, relative to the cutting die 10, beyond the cutting edge 14 along the straight line of relative translation (above the cutting edge 14 if the first direction of movement and the first direction of sliding are directed upwards, below the cutting edge 14 if the first direction of movement and the first direction of sliding are directed downwards).

In the embodiment illustrated, the first direction of movement and the first direction of sliding are directed upwards and, in the first position, the plurality of centring elements 20 is at a higher height relative to its height when it is in the second position.

In accordance with this invention, one or more elastic elements 15 are interposed between the plurality of centring elements 20 and the cutting die 10 for pushing the plurality of centring elements 20 towards the first position (and for keeping them in the first position in the absence of other stresses on the centring elements 20). When the plurality of centring elements 20 is in the second position, or in an intermediate position between the second position and the first position, the one or more elastic elements 15 push the plurality of centring elements 20 along the straight line of relative translation in the first direction of sliding (upwards in the embodiment illustrated). In the embodiment illustrated, the apparatus 1 comprises a plurality of compression springs; although other embodiments (not illustrated) may comprise extension springs, rubber elastic elements, or one or more elastic elements 15 of a different type known to technicians in the sector, even in combination with each other.

The plurality of centring elements 20 is movable together with the cutting die 10 by means of the actuator 11 along the straight line of movement: keeping the plurality of centring elements 20 in a fixed relative position relative to the cutting die 10 (advantageously in the first position under the action of the one or more elastic elements 15), the plurality of centring elements 20 is movable together with the cutting die 10 in the first or in the second direction of movement during a movement of the cutting die 10 respectively in the first or in the second direction of movement.

In some embodiments, each centring element 20 has a main line of extension which is parallel to the straight line of relative translation and which is therefore vertical (as in the case of the embodiment illustrated).

Preferably, the centring elements 20 of the plurality of centring elements 20 are integrally constrained to each other. Within the scope of this invention, "integrally constrained" means that between the two or more elements indicated as integrally constrained to each other (or one relative to the other) there is a physical constraint which prevents any relative movement: the two or more elements behave like one piece, since they are made that way or because they are purposely coupled by means of permanent connections (for example by means of welding) or non-permanent connections (for example by bolting). In the embodiment illustrated, the centring elements 20 are as one with a connecting frame 22.

In some embodiments, the cutting die 10 is integrally constrained to a connecting element 16 coupled to the actuator 11, and the one or more elastic elements 15 are placed between the plurality of centring elements 20 and that connecting element 16.

In the embodiment illustrated, the cutting die 10 comprises a plurality of vertical supporting legs 17 which extend on the opposite side to the cutting edge 14, and which at their end are fixed by bolts to the connecting element 16. The connecting element 16 is a plate having dimensions in plan view similar to those of the cutting die 10, and is coupled at the centre to a movable part 12 of the actuator 11. Advantageously, fixed to the connecting element 16 there is a plurality of vertical pins 18 which are received in respective seats made inside at least some elements of the plurality of centring elements 20: those centring elements 20 are slidable relative to the vertical pins 18, and the compression springs are placed between the connecting element 16 and those centring elements 20 around the vertical pins 18.

Advantageously, the one or more elastic elements 15 are evenly distributed around the working axis of the actuator 11.

In some preferred embodiments such as that illustrated in the accompanying figures, the apparatus 1 further comprises a lower supporting member 30, an upper closing member 40 and applying means for applying in use the film 2 to the support 3. The lower supporting member 30 and the upper closing member 40 are vertically movable relative to each other (one relative to the other). In some embodiments (such as the one illustrated) the lower supporting member 30 is vertically movable and the upper closing member 40 is fixed; in contrast, in other embodiments (not illustrated) the upper closing member 40 is movable and the lower supporting member 30 is fixed, whilst in yet other embodiments (not illustrated) both of the members 30, 40 are vertically movable.

The lower supporting member 30 and the upper closing member 40 are movable relative to each other between an open configuration, in which they are uncoupled, and a closed configuration, in which they are coupled and between them delimit a working chamber 31. The cutting die 10 and the plurality of centring elements 20 are positioned in the working chamber 31, and the lower supporting member 30 comprises a supporting element 32 which defines at least one supporting surface 33 for supporting, in use, the support 3 during application of the film 2 inside the working chamber 31. The supporting element 32 may define a single continuous supporting surface 33, or multiple supporting surfaces 33 separate from each other. In the open configuration, the working chamber 31 is accessible from the outside, for example to place the support 3 on the at least one supporting surface 33, to place between the two members 30, 40 the film 2 to be applied to the support 3, or to remove the support 3 from the at least one supporting surface 33 when film 2 application has finished.

Advantageously, the supporting element 32 is a central portion of the lower supporting member 30 inside the working chamber 31, has a prismatic structure (a right prism) with an upper base substantially identical in shape and extent to the surface in plan view of the support 3, and advantageously defines a single continuous supporting surface 33 at the upper base (of the prismatic structure). In the embodiment illustrated, the supporting element 32 is supported by a plurality of lateral portions 34 of the lower supporting member 30, which extend passing through windows 19 defined between the connecting element 16 and the cutting die 10 (Figure 7).

In some embodiments, an annular frame 35 of the lower supporting member 30 delimits an upper opening 36 of a cavity 37 of the lower supporting member 30. That cavity 37 is configured to house the support 3 and is part of the working chamber 31 when the lower supporting member 30 and the upper closing member 40 are in the closed configuration. In the same embodiments, the at least one supporting surface 33 is inside the cavity 37, and the lower surface 41 of the upper closing member 40 is flat and delimits the working chamber 31 at the top when the lower supporting member 30 and the upper closing member 40 are in the closed configuration. In the closed configuration, the working chamber 31 is laterally delimited by the lower supporting member 30. Advantageously, for reasons described below, the plurality of centring elements 20 has flat upper ends 23 configured to interact with the lower surface 41 of the upper closing member 40.

In the embodiment illustrated, the supporting element 32, the cutting die 10 and the plurality of centring elements 20 are advantageously positioned in the cavity 37 of the lower supporting member 30, with the connecting element 16 (of the cutting die 10) and the connecting frame 22 (of the plurality of centring elements 20) placed below the supporting element 32. Advantageously, in order to perform a size change-over of the support 3 or a change in the way the film 2 is applied (for example, passing from skin type packaging to MAP - Modified Atmosphere Packaging), it is necessary to substitute only the lower supporting member 30 and/or some components which are associated with it and advantageously removable (such as for example the cutting die 10, the centring elements 20 and the supporting element 32).

In some embodiments the apparatus 1 is configured to perform packaging of a product 4 placed on a tray constituted of the support 3 in order to obtain a package in which the product 4 is enclosed between the tray and the film 2. Advantageously, the apparatus 1 is configured to perform skin type packaging, or MAP. The embodiment illustrated in the accompanying figures is an apparatus 1 configured to perform skin type packaging.

In some embodiments the apparatus 1 is configured to line the support 3 with the film 2.

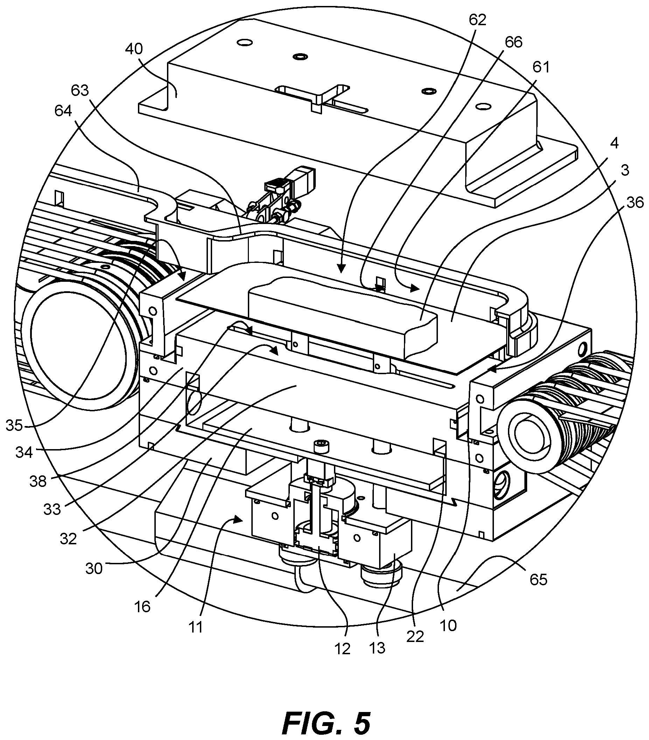

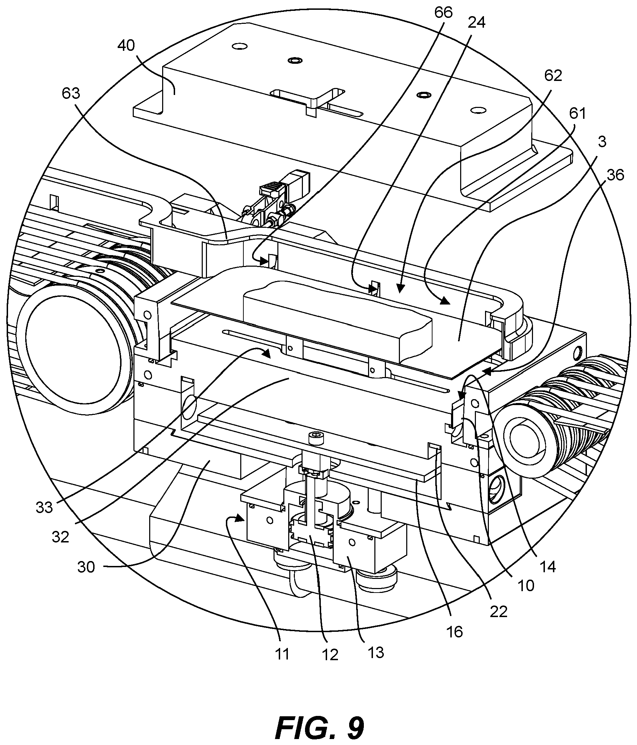

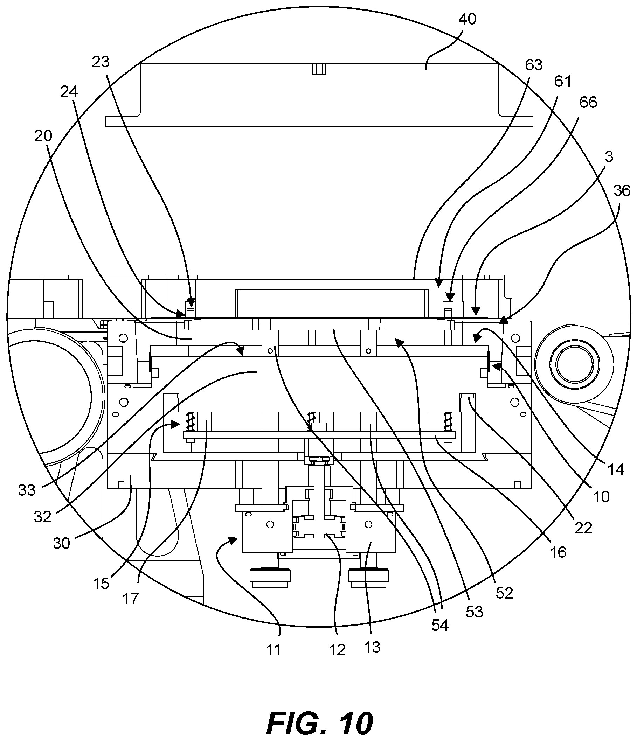

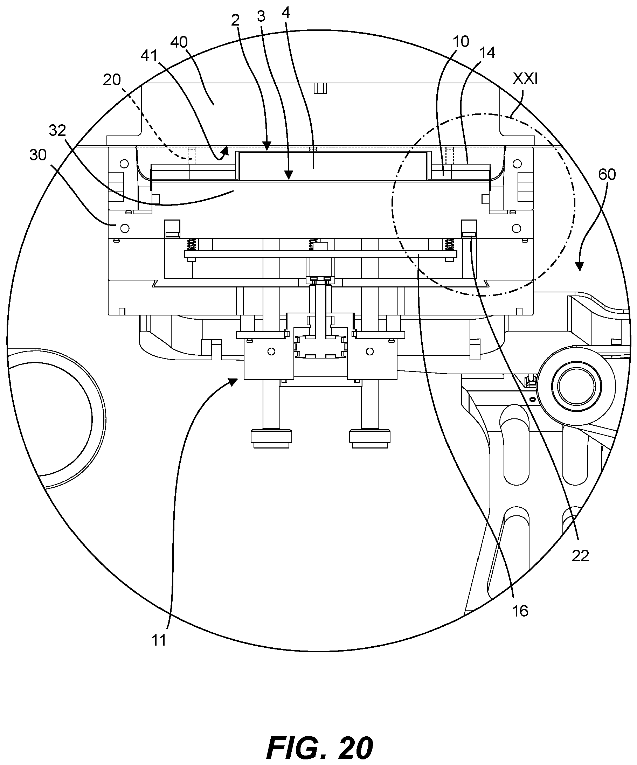

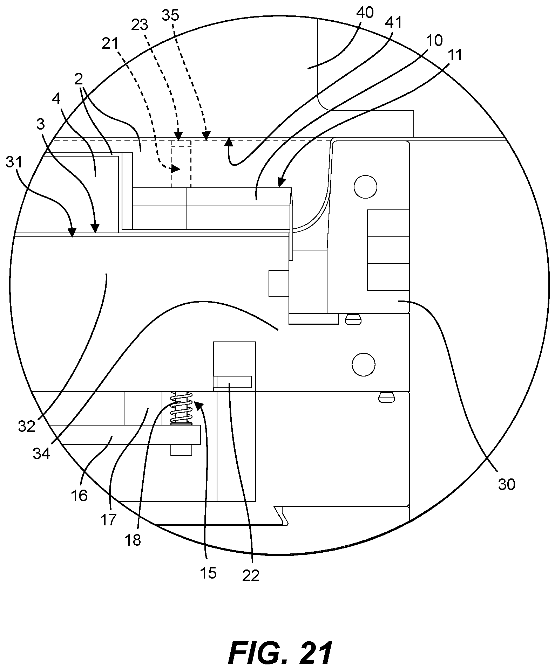

In preferred embodiments of this invention, the cutting die 10 and the plurality of centring elements 20 are associated with the lower supporting member 30. The cutting die 10 is arranged around the supporting element 32 and is movable relative to the supporting element 32 - along the straight line of movement - between a non-operating position and an operating position by means of the actuator 11 (advantageously fixed at a fixed part 13 of it to the lower supporting member 30): in the non-operating position, the cutting die 10 is placed - vertically - at a lower height relative to the height of the at least one supporting surface 33 (the cutting edge 14 of the cutting die 10 is below the at least one supporting surface 33, around or below the supporting element 32); in the operating position, the cutting die 10 is placed - vertically - at a higher height relative to the height of the at least one supporting surface 33 (the cutting edge 14 of the cutting die 10 projects above the at least one supporting surface 33). The cutting die 10 is movable in the first direction of movement (directed upwards) from the non-operating position to the operating position, and in the second direction of movement (directed downwards) from the operating position to the non-operating position. Advantageously, in the open configuration of the lower supporting member 30 and of the upper closing member 40, the plurality of centring elements 20 is in the first position relative to the cutting die 10, and the cutting die 10 and the plurality of centring elements 20 are movable together, relative to the supporting element 32, between a low position and a high position along the straight line of movement (by means of the actuator 11): in the low position, the cutting die 10 is in the non-operating position and the plurality of centring elements 20 is, relative to the at least one supporting surface 33, in a lowered position (in the embodiment illustrated, refer for example to Figures 5, 6 and 16); in the high position, the cutting die 10 is in the operating position and the plurality of centring elements 20 is, relative to the at least one supporting surface 33, in a raised position (in the embodiment illustrated, refer for example to Figures 9 and 10 - notice the positions adopted by the connecting element 16 and by the connecting frame 22). In the embodiment illustrated, the plurality of centring elements 20 projects above the cutting edge 14 both in the raised position, and in the lowered position. The cutting die 10 and the plurality of centring elements 20 are movable together from the low position to the high position in the first direction of movement, and from the high position to the low position in the second direction of movement. Advantageously, in the closed configuration of the lower supporting member 30 and of the upper closing member 40, the plurality of centring elements 20 is positionable, relative to the at least one supporting surface 33, in a locked position. When it is in the locked position, the lower surface 41 of the upper closing member 40 prevents an upward shifting along the straight line of movement (in the first direction of movement) of the plurality of centring elements 20 during a shifting of the cutting die 10 towards the operating position (in the first direction of movement); in the case of the embodiment illustrated, refer to Figures 20 and 21. In the case of the embodiment illustrated, in use, when the plurality of centring elements 20 is in the locked position, the film 2 is retained between the flat upper ends 23 of the centring elements 20 and the lower surface 41 of the upper closing member 40.

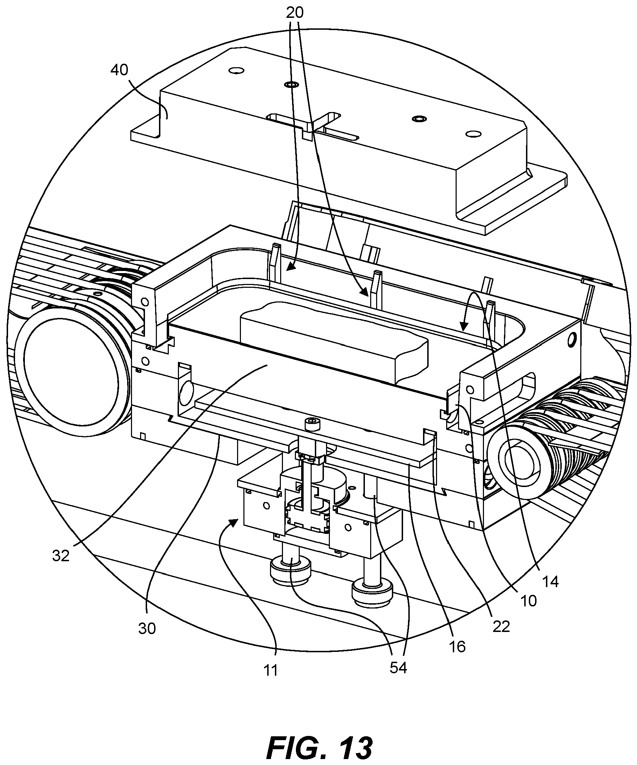

That locked position is a position - along the straight line of movement - lower relative to the raised position (relative to the at least one supporting surface 33, the plurality of centring elements 20 is lower than when it is in the raised position). With the plurality of centring elements 20 in the locked position (locked by the upper closing member 40), a movement of the cutting die 10 in the first direction of movement (relative to the supporting element 32) corresponds to a relative translation of the plurality of centring elements 20 in the second direction of sliding (relative to the cutting die 10) and a deformation of the one or more elastic elements 15. In a first group of embodiments, the locked position corresponds to an intermediate position between the lowered position and the raised position; this is the case in the embodiment illustrated in the accompanying figures (compare for example Figures 13, 17 and 21). In a second group of embodiments (not illustrated), the locked position coincides with the lowered position. In a third group of embodiments (not illustrated), the locked position corresponds to a position lower than the lowered position.

Advantageously, the apparatus 1 is further configured to adopt in sequence, in use, a centring configuration, an applying configuration and an end of cut configuration.

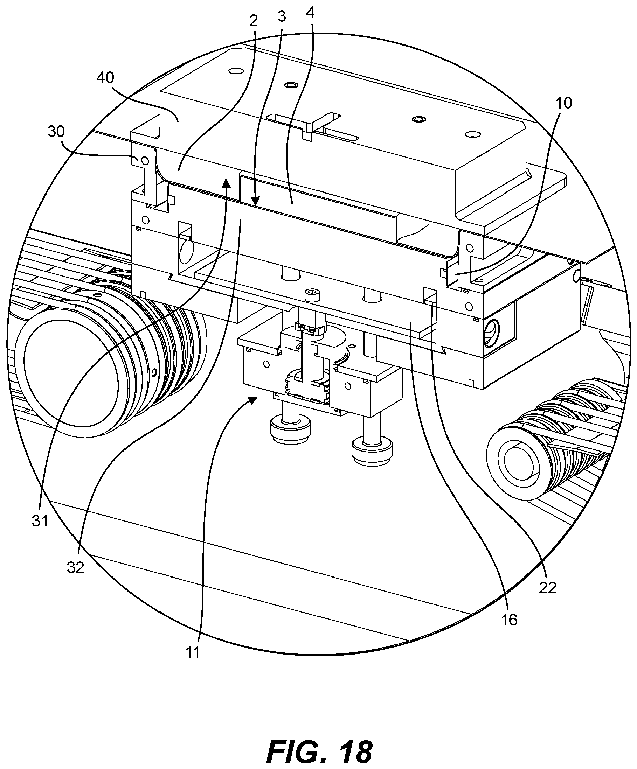

In the centring configuration, the lower supporting member 30 and the upper closing member 40 are in the open configuration and the cutting die 10 and the plurality of centring elements 20 are in the high position (Figures 9 to 14). In the applying configuration, the lower supporting member 30 and the upper closing member 40 are in the closed configuration and the cutting die 10 is in the non-operating position (Figure 18). In those cases in which the locked position is an intermediate position between the lowered position and the raised position (the case of the first group of embodiments described above) or coincides with the lowered position (the case of the second group of embodiments described above), in the applying configuration the plurality of centring elements 20 is in the lowered position and the cutting die 10 and the centring elements 20 are in a position with coincides with the low position. In contrast, in those cases in which the locked position is a position lower than the lowered position (the case of the third group of embodiments described above), in the applying configuration the plurality of centring elements 20 is in the locked position. The applying means are activatable for applying, in use, the film 2 to the support 3 when the apparatus 1 is in the applying configuration. In some embodiments such as that illustrated, the applying means comprise heating means for the film 2, advantageously associated with the upper closing member 40, and means for creating the vacuum associated with the lower supporting member 30 in order to perform skin type packaging (notice, from Figure 18, the film 2 thermoformed on the product 4 and on the support 3). Since it is information known to experts in the sector which does not relate to the innovative aspects of this invention, in this description further details about the structure and operation of the applying means are not provided.

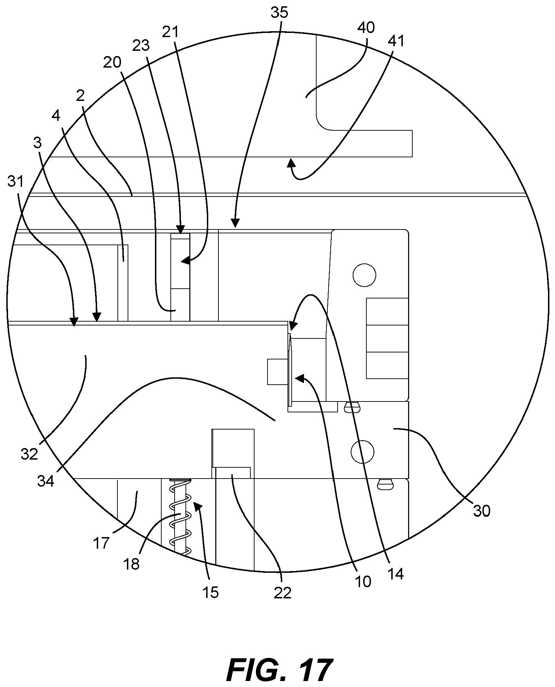

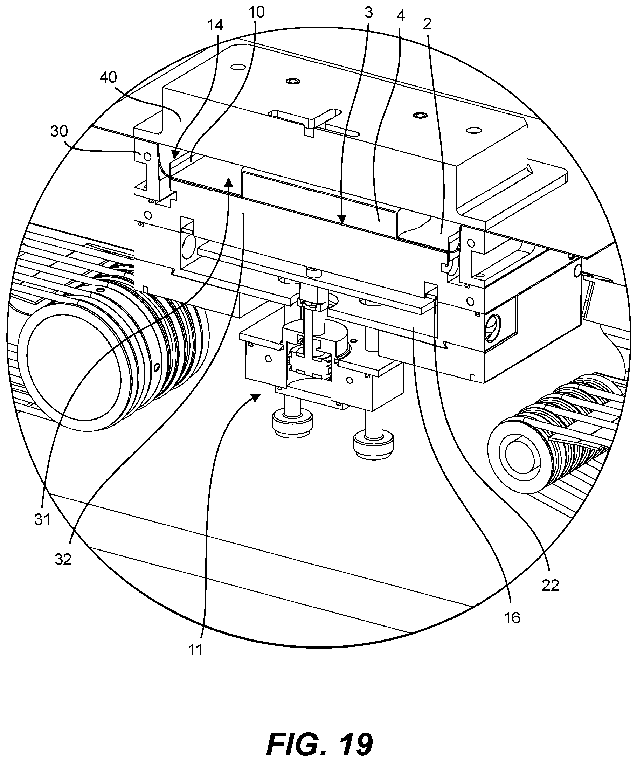

In the end of cut configuration (Figures 19 to 21), the lower supporting member 30 and the upper closing member 40 are in the closed configuration, the cutting die 10 is in the operating position, the plurality of centring elements 20 is in the locked position and, relative to the cutting die 10, the plurality of centring elements 20 is spaced apart from the first position, and advantageously is in an intermediate position between the first position and the second position (spaced apart from the second position); the one ore more elastic elements 15 are deformed. In the embodiment illustrated, the different positions adopted by the plurality of centring elements 20 relative to the cutting die 10 in the applying configuration and end of cut configuration can be recognised by comparing the two different states of deformation of the elastic element 15 visible in Figure 17 and in Figure 21.

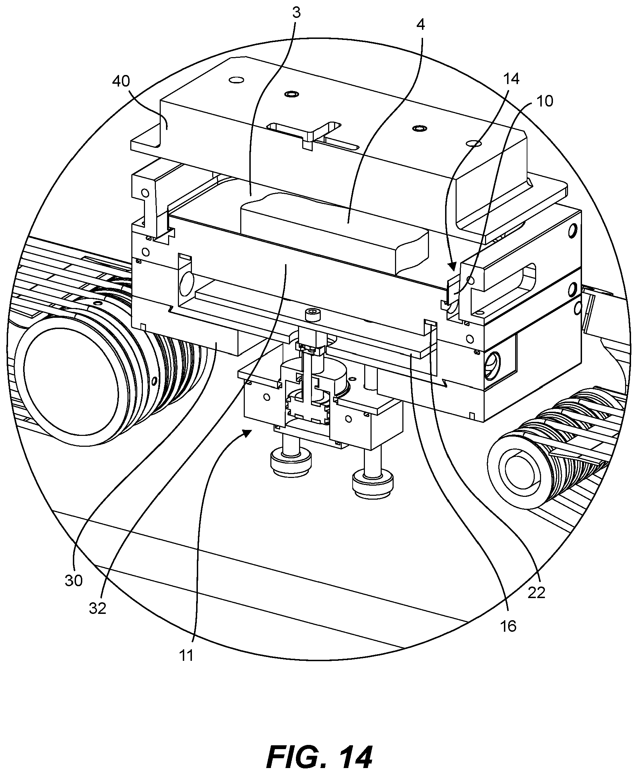

Figures 13 to 18 show a possible switch from the centring configuration to the applying configuration with reference to the embodiment illustrated. Starting from the centring configuration, with the support 3 positioned on the supporting surface 33 and centred inside the cutting die 10 and with the film 2 placed between the two members 30, 40, the lower supporting member 30 is translated vertically towards the upper closing member 40 keeping the cutting die 10 and the plurality of centring elements 20 in the high position (Figure 14), advantageously keeping the support 3 centred inside the cutting die 10. Before the lower supporting member 30 and the upper closing member 40 have reached the closed configuration, the cutting die 10 and the plurality of centring elements 20 are moved from the high position to the low position (Figures 15, 16, 17). Then, the lower supporting member 30 and the upper closing member 40 reach the closed configuration (Figure 18) and the apparatus 1 adopts the applying configuration.

In another possible way of switching (not illustrated) from the centring configuration to the applying configuration of the apparatus 1 illustrated, the lower supporting member 30 and the upper closing member 40 are in contrast switched from the open configuration to the closed configuration when the cutting die 10 and the plurality of centring elements 20 are still in the high position: in this case, with the two members 30, 40 moving towards each other, the lower surface 41 of the upper closing member 40 first makes contact with the centring elements 20 (with interposed film 2) and then pushes the plurality of centring elements 20 from the raised position to the locked position (the plurality of centring elements 20 translates, relative to the cutting die 10, in the second direction of sliding). The cutting die 10 is then moved from the operating position to the non-operating position by means of the actuator 11, and the plurality of centring elements 20 reaches the lowered position.

Obviously, other ways of switching between the centring configuration and the applying configuration are also possible.

During the switch from the applying configuration to the end of cut configuration different situations may arise depending on the embodiment of the apparatus.

In the case of the first group of embodiments described above, starting from the applying configuration, first the plurality of centring elements 20 reaches the locked position starting from the lowered position by moving together with the cutting die 10 in the first direction of movement. Then, the cutting die 10 continues to move in the first direction of movement and performs a relative vertical translation relative to the plurality of centring elements 20 placed in the locked position (or, from the cutting die 10 viewpoint, the plurality of centring elements 20 translates relative to the cutting die 10 along the straight line of relative translation in the second direction of sliding - towards the second position). During this relative vertical translation of the cutting die 10 relative to the plurality of centring elements 20, the one or more elastic elements 15 deform.

Otherwise, in the case of the second and third group of embodiments described above, in the applying configuration the plurality of centring elements 20 is already in the locked position. The entire movement of the cutting die 10 in the first direction of movement towards the operating position therefore corresponds to a relative vertical translation relative to the plurality of centring elements 20 placed in the locked position.

In some embodiments, the apparatus 1 further comprises a positioning device 50 associated with the lower supporting member 30 for positioning, in use, the support 3 on the at least one supporting surface 33. The positioning device 50 has an upper operating surface 51 and, when the lower supporting member 30 and the upper closing member 40 are in the open configuration, the positioning device 50 is movable, relative to the at least one supporting surface 33, between a far position and a near position. In the far position, the upper operating surface 51 is at the upper opening 36 or is outside the cavity 37 for receiving, in use, the support 3. In the near position, the upper operating surface 51 is at the at least one supporting surface 33 for releasing, in use, the support 3 onto the at least one supporting surface 33.

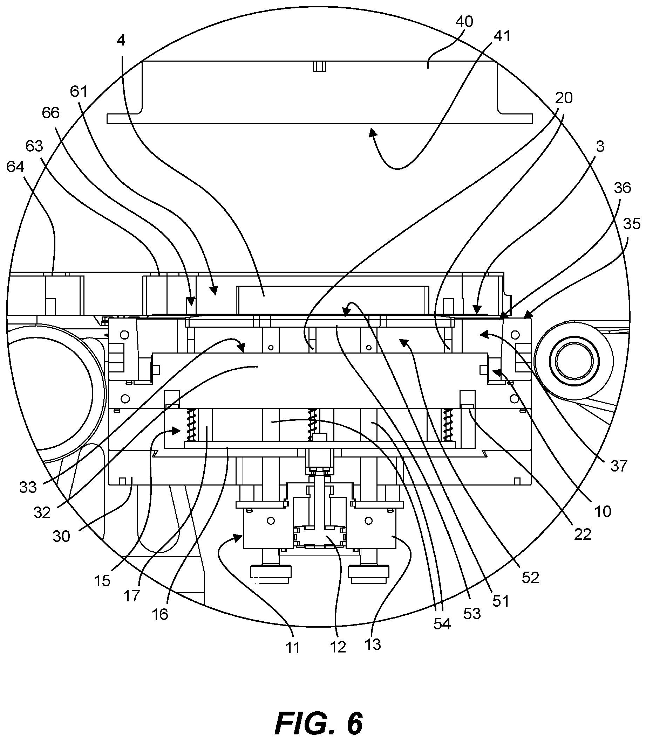

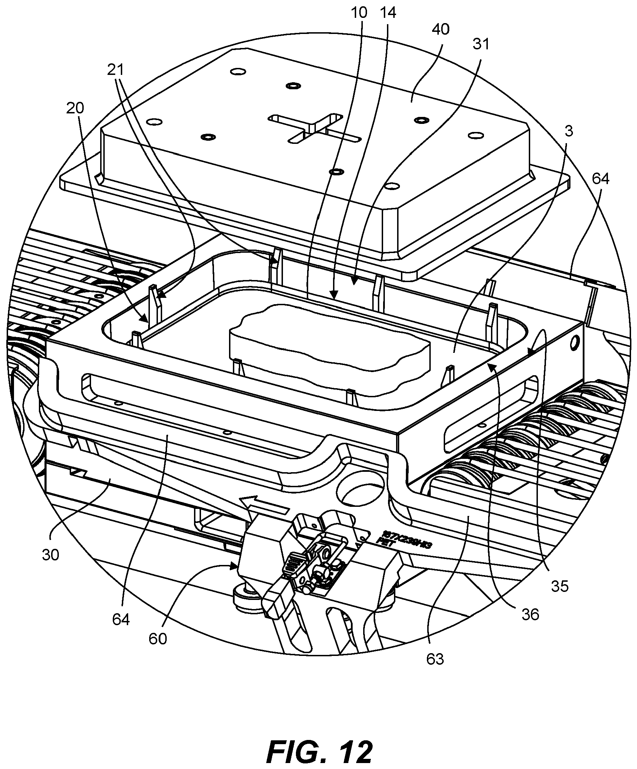

In the embodiment illustrated, the positioning device 50 comprises a pair of pushers 52 vertically translatable relative to the lower supporting member 30. Each pusher 52 comprises an upper body 53 and a pair of rods 54 which are slidable through the supporting element 32, through the connecting element 16 of the cutting die 10 and through a lower part of the lower supporting member 30, as well as an actuator for the movement of the rods 54, not illustrated. The upper operating surface 51 is defined by the pair of upper bodies 53. In the far position (Figures 1 to 6 and 9 to 11), the upper operating surface 51 is just above the upper opening 36 (see in particular Figures 6 or 10). In the near position (Figures 12 to 21), the pair of upper bodies 53 is advantageously received in a pair of channels 38 in the supporting element 32, with the upper operating surface 51 level with the supporting surface 33 of the supporting element 32; in another embodiment (not illustrated), in the near position, the upper operating surface 51 is just below the at least one supporting surface 33.

Some embodiments of the apparatus 1 further comprise a feeding device 60 for feeding, in use, a support 3 onto the positioning device 50 placed in the far position. That feeding device 60 comprises a plurality of operating walls 61 and is movable between a pick-up position and a release position. In the pick-up position, the plurality of operating walls 61 is at a pick-up station 70 for picking up, in use, the support 3. In the release position, the plurality of operating walls 61 is at the lower supporting member 30 for releasing, in use, the support 3 onto the positioning device 50. The operating walls 61 of the plurality of operating walls 61 are further movable between a working position, in which they face each other and laterally delimit a confining space 62 in which, in use, they laterally confine the support 3, and a home position. In those embodiments, when the lower supporting member 30 and the upper closing member 40 are in the open configuration and the feeding device 60 is in the release position, the plurality of operating walls 61 placed in the working position is above the upper opening 36 of the cavity 37.

In some embodiments, in the working position the plurality of operating walls 61 also at least partly delimits at the top and/or bottom, the confining space 62 for limiting any vertical shifting of the support 3.

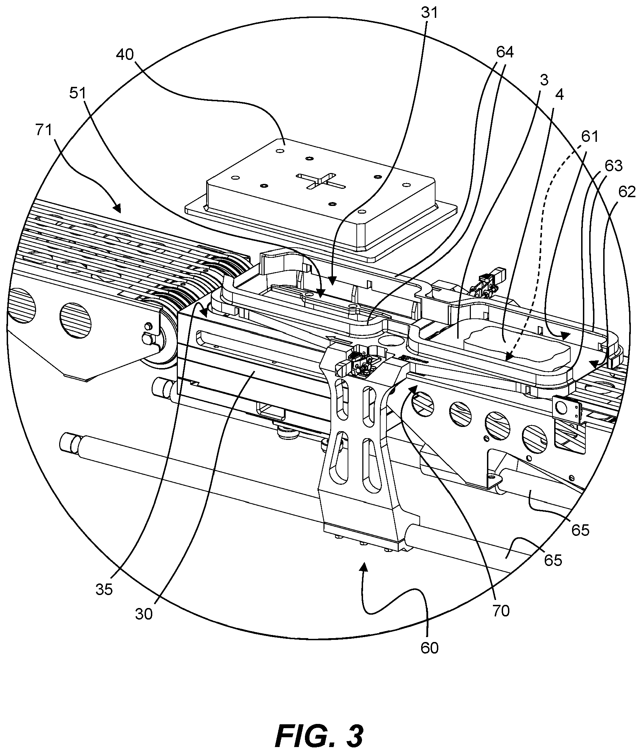

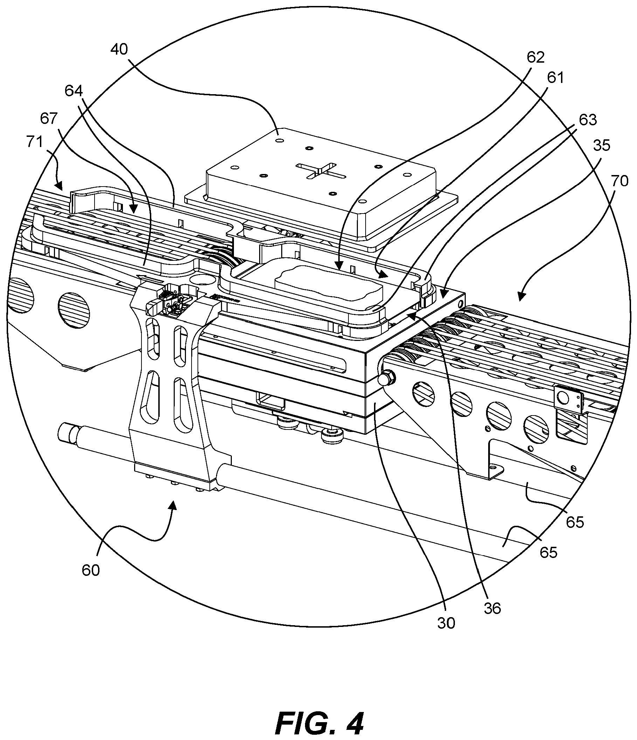

In the case of the embodiment illustrated (see for example Figure 3), the feeding device 60 comprises a first pair of C-shaped elements 63 for feeding the support 3 onto the positioning device 50; advantageously, the device comprises a second pair of C-shaped elements 64 for removing the support 3 from the positioning device 50 once the film 2 has been applied. The inner wall of the C of each C-shaped element is an operating wall 61 and is advantageously shaped to match the outer edge (in plan view) of one half of the support 3. In the working position, the C-shaped elements of the first pair of C-shaped elements 63 are arranged specularly in the same plane with the operating walls 61 facing each other. Each C-shaped element of the first pair of C-shaped elements 63 is rotatable around its own control shaft 65 and is translatable along that control shaft 65; the two control shafts 65 are parallel and advantageously horizontal. The feeding device 60 is movable between the pick-up position (in which it is at a first conveyor belt which defines the pick-up station 70) and the release position (in which it is at the upper opening 36) by means of a (coordinated) translation of the first pair of C-shaped elements 63 along the respective control shafts 65; the plurality of operating walls 61 is movable between the working position and the home position by means of an oscillation of each C-shaped element around its own control shaft 65. During the translation from the pick-up position to the release position (Figures 3 and 4), the plurality of operating walls 61 of the first pair of C-shaped elements 63 is in the working position and advantageously pushes the support 3 from the pick-up station 70 as far as the upper operating surface 51 of the positioning device 50.

**In** some preferred embodiments, in the raised position of the plurality of centring elements 20, a top portion 24 of each centring element 20 (which in the accompanying figures also defines the flat upper end 23) is placed at a higher height than the maximum height reachable by the upper operating surface 51 of the positioning device 50; vice versa, in the lowered position of the plurality of centring elements 20, the top portion 24 of each centring element 20 is placed at a lower height than the maximum height reachable by the upper operating surface 51. Those heights (of the top portion 24 and of the upper operating surface 51) are understood to refer to the at least one supporting surface 33 of the supporting element 32; the maximum height reachable by the upper operating surface 51 corresponds to the height at which the upper operating surface 51 is in the far position of the positioning device 50. With the positioning device 50 in the far position and the plurality of centring elements 20 in the raised position, each top portion 24 projects above the upper operating surface 51. When the plurality of centring elements 20 is in the raised position (that is to say, when the cutting die 10 is in the high position) with the feeding device 60 in the release position and the plurality of operating walls 61 in the working position, the top portions 24 are arranged laterally around (the outside of) the confining space 62 delimited by the plurality of operating walls 61.

Advantageously, with the support 3 placed on the positioning device 50 in the far position, the plurality of centring elements 20 is movable from the lowered position to the raised position (during a movement with the cutting die 10 from the low position to the high position) to laterally surround the support 3 and to allow, during a subsequent lowering of the positioning device 50 from the far position to the release position, centring of the support 3 in the plurality of centring elements 20 and finally inside the cutting die 10. To recognise this in the case of the embodiment illustrated, compare Figures 5 and 6, in which the cutting die 10 and the plurality of centring elements 20 are in the low position, with Figures 9 and 10 and Figures 11 to 13, in which the cutting die 10 and the plurality of centring elements 20 are in the high position (with the apparatus 1 in the centring configuration).

In some embodiments, the plurality of operating walls 61 defines a plurality of receiving seats 66, and when the plurality of centring elements 20 is in the raised position with the feeding device 60 in the release position and the plurality of operating walls 61 in the working position, the plurality of centring elements 20 is inserted in the plurality of receiving seats 66.

In some embodiments, when the feeding device 60 is in the release position and the plurality of operating walls 61 is in the working position, the receiving seats 66 are open towards the confining space 62. In the case of the embodiment illustrated, each operating wall 61 defines a plurality of receiving seats 66 which are open on the inner side of the C-shaped element (open towards the confining space 62 when the positioning device 50 is in the working position) and on a lower side for receiving the plurality of centring elements 20 during their movement from the lowered position to the raised position.

In some embodiments, when the feeding device 60 is in the release position with the plurality of operating walls 61 in the working position and the plurality of centring elements 20 in the raised position, the shifting of the plurality of operating walls 61 from the working position to the home position causes the plurality of centring elements 20 to be taken out of the plurality of receiving seats 66. For example, in the embodiment illustrated, each C-shaped element rotates, around its own control shaft 65, upwards and away from the plurality of centring elements 20, freeing the space above to allow the lower supporting member 30 to move towards the upper closing member 40 (Figures 9 to 14). The receiving seats 66 have dimensions and shapes suitable for avoiding contact between the C-shaped elements and the centring elements 20.

In some embodiments (not illustrated), the plurality of operating walls 61 does not define any receiving seats 66 and, when the plurality of centring elements 20 is in the raised position, with the feeding device 60 in the release position and the plurality of operating walls 61 in the working position, the plurality of centring elements 20 is arranged around the feeding device 60 (on the outside of the operating walls 61) or below it.

Advantageously, once the film 2 has been applied and cut, the positioning device 50 is movable from the near position to the far position in order to extract the support 3 from the lower supporting member 30 (when the latter and the upper closing member 40 are in the open configuration).

In some embodiments, the feeding device 60 is also a removing device. This is the case of the embodiment illustrated, in which the feeding device 60 comprises, as said, a second pair of C-shaped elements 64 similar to the first pair of C-shaped elements 63: each C-shaped element of the second pair of C-shaped elements 64 is integral with a respective C-shaped element of the first pair of C-shaped elements 63 and forms an E-shaped element with it. When the plurality of operating walls 61 of the first pair of C-shaped elements 63 is in the working position, the operating walls of the second pair of C-shaped elements 64 are facing each other and between them delimit a second confining space 67 in which in use they laterally confine the support 3 to be removed. When the feeding device 60 is in the pick-up position, the second pair of C-shaped elements 64 is at the lower supporting member 30 for picking up the support 3 from the positioning device 50 (in the far position); when the feeding device 60 is in the release position, the second pair of C-shaped elements 64 is at a release station 71 (defined by a second conveyor belt) onto which to release the support 3.

Advantageously, when, during the translation from the pick-up position to the release position (Figures 3 and 4), the plurality of operating walls 61 of the first pair of C-shaped elements 63 pushes a support 3 to be fed from the pick-up station 70 as far as the upper operating surface 51, the plurality of operating walls 61 of the second pair of C-shaped elements 64 simultaneously pushes the support 3 to be removed (not illustrated) from the upper operating surface 51 to the release station 71.

Although the accompanying figures show an apparatus 1 intended for working one support 3 at a time, in other embodiments the apparatus is configured to work multiple supports 3 simultaneously. In those cases, advantageously the apparatus comprises a working chamber 31 for each support 3 to be worked. In the known way, not described in detail, the different working chambers 31 may further be aligned one after another parallel to the control shafts 65 and the feeding device 60 may comprise a number of pairs of C-shaped elements 63, 64 which is double the number of working chambers 31.

This invention brings many advantages.

In fact, through this invention it has been possible to obtain an apparatus for applying a film to a support which allows precise centring of the support during use to be achieved, and in particular allows precise centring of a support which is flat and without lateral walls.

This invention has also made it possible to obtain an apparatus which allows centring to be performed, in a relatively simple way in terms of construction, by using sliding constraints and one or more elastic elements.

This invention has also made it possible to obtain an apparatus which allows centring to be performed in a relatively simple way even in terms of operation: in fact, the cutting die and the plurality of centring elements are movable using a single actuator.

The invention described above may be modified and adapted in several ways without thereby departing from the scope of the inventive concept as set out in the independent claims.

All details may be substituted with other technically equivalent elements and the materials used, as well as the shapes and dimensions of the various components, may vary according to requirements.

## Claims

1. An apparatus (1) for applying a film (2) to a support (3), comprising a cutting die (10) for cutting the film (2), a plurality of centring elements (20) for centring the support (3) in the cutting die (10) and an actuator (11), wherein the actuator (11) is connected to the cutting die (10) and the cutting die (10) is movable by means of the actuator (11) along a straight line of movement which is vertical, **characterized in that**:
the plurality of centring elements (20) is arranged around the cutting die (10) and is slidably constrained to the cutting die (10) between a first position and a second position along a straight line of relative translation which is parallel to the straight line of movement of the cutting die (10);
one or more elastic elements (15) are interposed between the plurality of centring elements (20) and the cutting die (10) for pushing the plurality of centring elements (20) towards the first position; and
the plurality of centring elements (20) is movable together with the cutting die (10) by means of the actuator (11) along the straight line of movement.

2. The apparatus (1) according to claim 1, further comprising a lower supporting member (30), an upper closing member (40) and applying means for applying in use the film (2) to the support (3), wherein:
the lower supporting member (30) and the upper closing member (40) are movable relative to each other between an open configuration, in which they are uncoupled, and a closed configuration, in which they are coupled and between them delimit a working chamber (31);
the lower supporting member (30) comprises a supporting element (32) which defines at least one supporting surface (33) for supporting, in use, the support (3) during application of the film (2) inside the working chamber (31); and
the cutting die (10) and the plurality of centring elements (20) are positioned in the working chamber (31).

3. The apparatus (1) according to claim 2, wherein moreover:
the cutting die (10) is associated with the lower supporting member (30), is arranged around the supporting element (32) and is movable, relative to the supporting element (32), between a non-operating position and an operating position by means of the actuator (11), the cutting die (10) being placed, when it is respectively in the non-operating position and in the operating position, respectively at a lower height and at a higher height relative to the at least one supporting surface (33);
the plurality of centring elements (20) is associated with the lower supporting member (30);
in the open configuration of the lower supporting member (30) and of the upper closing member (40), the plurality of centring elements (20) is in the first position relative to the cutting die (10), and the cutting die (10) and the plurality of centring elements (20) are movable together, relative to the supporting element (32), between a high position and a low position along the straight line of movement;
in the high position, the cutting die (10) is in the operating position and the plurality of centring elements (20) is in a raised position relative to the at least one supporting surface (33);
in the low position, the cutting die (10) is in the non-operating position and the plurality of centring elements (20) is in a lowered position relative to the at least one supporting surface (33); and
in the closed configuration of the lower supporting member (30) and of the upper closing member (40), the plurality of centring elements (20) is positionable, relative to the at least one supporting surface (33), in a locked position in which a lower surface (41) of the upper closing member (40) prevents an upward shifting, along the straight line of movement, of the plurality of centring elements (20) during a shifting of the cutting die (10) towards the operating position.

4. The apparatus (1) according to claim 3, wherein the apparatus (1) is further configured to adopt in sequence, in use, a centring configuration, an applying configuration and an end of cut configuration, wherein:
in the centring configuration, the lower supporting member (30) and the upper closing member (40) are in the open configuration and the cutting die (10) and the plurality of centring elements (20) are in the high position;
in the applying configuration, the lower supporting member (30) and the upper closing member (40) are in the closed configuration and the cutting die (10) is in the non-operating position; and
in the end of cut configuration, the lower supporting member (30) and the upper closing member (40) are in the closed configuration, the cutting die (10) is in the operating position, the plurality of centring elements (20) is in the locked position and, relative to the cutting die (10), the plurality of centring elements (20) is spaced apart from the first position;
and wherein moreover:
the applying means are activatable for applying, in use, the film (2) to the support (3) when the apparatus (1) is in the applying configuration; and
during a switch from the applying configuration to the end of cut configuration, the cutting die (10) performs a relative vertical translation relative to the plurality of centring elements (20) placed in the locked position.

5. The apparatus (1) according to claim 3 or 4, wherein:
an annular frame (35) of the lower supporting member (30) delimits an upper opening (36) of a cavity (37) of the lower supporting member (30), said cavity (37) being configured to house the support (3) and being part of the working chamber (31) when the lower supporting member (30) and the upper closing member (40) are in the closed configuration, the at least one supporting surface (33) being inside said cavity (37);
the lower surface (41) of the upper closing member (40) is flat and delimits the working chamber (31) at the top when the lower supporting member (30) and the upper closing member (40) are in the closed configuration.

6. The apparatus (1) according to claim 5, further comprising a positioning device (50) associated with the lower supporting member (30) for positioning, in use, the support (3) on the at least one supporting surface (33), wherein:
the positioning device (50) has an upper operating surface (51) and, when the lower supporting member (30) and the upper closing member (40) are in the open configuration, the positioning device (50) is movable relative to the at least one supporting surface (33) between a far position and a near position;
in the far position, the upper operating surface (51) is at the upper opening (36) or is outside the cavity (37) for receiving, in use, the support (3); and
in the near position, the upper operating surface (51) is at the at least one supporting surface (33) for releasing, in use, the support (3) onto the at least one supporting surface (33).

7. The apparatus (1) according to claim 6, further comprising a feeding device (60) for feeding, in use, a support (3) onto the positioning device (50) placed in the far position, wherein:
the feeding device (60) comprises a plurality of operating walls (61);
the feeding device (60) is movable between a pick-up position, in which the plurality of operating walls (61) is at a pick-up station (70) for picking up, in use, the support (3), and a release position, in which the plurality of operating walls (61) is at the lower supporting member (30) for releasing, in use, the support (3) onto the positioning device (50);
the operating walls of the plurality of operating walls (61) are movable between a working position, in which they face each other and laterally delimit a confining space (62) in which, in use, they laterally confine the support (3), and a home position;
when the lower supporting member (30) and the upper closing member (40) are in the open configuration and the feeding device (60) is in the release position, the plurality of operating walls (61) placed in the working position is above the upper opening (36) of the cavity (37).

8. The apparatus (1) according to claim 7, wherein:
in the raised position and in the lowered position of the plurality of centring elements (20), a top portion (24) of each centring element (20) of the plurality of centring elements (20) is placed, respectively, at a higher height and at a lower height than the maximum height reachable by the upper operating surface (51) of the positioning device (50);
when the plurality of centring elements (20) is in the raised position with the feeding device (60) in the release position and the plurality of operating walls (61) in the working position, the top portions (24) are arranged laterally around the confining space (62) delimited by the plurality of operating walls (61).

9. The apparatus (1) according to claim 8, wherein:
the plurality of operating walls (61) defines a plurality of receiving seats (66);
when the plurality of centring elements (20) is in the raised position with the feeding device (60) in the release position and the plurality of operating walls (61) in the working position, the plurality of centring elements (20) is inserted in the plurality of receiving seats (66).

10. The apparatus (1) according to claim 9, wherein, when the feeding device (60) is in the release position and the plurality of operating walls (61) is in the working position, the receiving seats (66) are open towards the confining space (62).

11. The apparatus (1) according to claim 9 or 10, wherein, when the feeding device (60) is in the release position with the plurality of operating walls (61) in the working position and the plurality of centring elements (20) in the raised position, the shifting of the plurality of operating walls (61) from the working position to the home position causes the plurality of centring elements (20) to be taken out of the plurality of receiving seats (66).

12. The apparatus (1) according to any one of claims 1 to 11, wherein each centring element (20) has a main line of extension which is parallel to the straight line of relative translation.

13. The apparatus (1) according to any one of claims 1 to 12, wherein the centring elements (20) of the plurality of centring elements (20) are integrally constrained to each other.

14. The apparatus (1) according to any one of claims 1 to 13, wherein the cutting die (10) is integrally constrained to a connecting element (16) coupled to the actuator (11), and wherein the one or more elastic elements (15) are placed between the plurality of centring elements (20) and said connecting element (16).

15. The apparatus (1) according to any one of claims 1 to 14, wherein the apparatus (1) is configured to:
line the support (3) with the film (2) in order to obtain a tray; or
package a product (4) placed on the support (3) in order to obtain a package in which the product (4) is enclosed between the support (3) which acts as a tray and the film (2).

## Patentansprüche

1. Vorrichtung (1) zum Aufbringen einer Folie (2) auf einen Träger (3), mit einer Stanzmatrize (10) zum Stanzen der Folie (2), einer Vielzahl von Zentrierelementen (20) zum Zentrieren des Trägers (3) in der Stanzmatrize (10) und einem Aktuator (11), wobei der Aktuator (11) mit der Stanzmatrize (10) verbunden ist und die Stanzmatrize (10) mittels des Aktuators (11) entlang einer geradlinigen, vertikalen Bewegungsrichtung verfahrbar ist, **dadurch gekennzeichnet, dass**:
die Vielzahl von Zentrierelementen (20) um die Stanzmatrize (10) herum angeordnet und zwischen einer ersten Position und einer zweiten Position entlang einer geraden Linie der relativen Verschiebungsrichtung auf der Stanzmatrize (10) verschiebbar gelagert ist, die parallel zur geradlinigen Bewegungsrichtung der Stanzmatrize (10) verläuft;
ein oder mehrere elastische Elemente (15) zwischen der Vielzahl von Zentrierelementen (20) und der Stanzmatrize (10) angeordnet sind, um die Vielzahl von Zentrierelementen (20) in Richtung der ersten Position zu schieben; und
die Vielzahl von Zentrierelementen (20) gemeinsam mit der Stanzmatrize (10) mithilfe des Aktuators (11) entlang der geradlinigen Bewegungsrichtung verfahrbar ist.

2. Vorrichtung (1) nach Anspruch 1, ferner mit einem unteren Halteelement (30), einem oberen Schließelement (40) und Aufbringeinrichtungen zum Aufbringen der Folie (2) auf den Träger (3) im Betrieb, wobei:
das untere Halteelement (30) und das obere Schließelement (40) relativ zueinander zwischen einer offenen Konfiguration, in der sie voneinander entkoppelt sind, und einer geschlossenen Konfiguration, in der sie miteinander gekoppelt sind und zwischen sich eine Arbeitskammer (31) begrenzen, verfahrbar sind;
das untere Halteelement (30) ein Halteelement (32) umfasst, das mindestens eine Haltefläche (33) zum Halten des Trägers (3) während des Aufbringens der Folie (2) im Inneren der Arbeitskammer (31) im Betrieb definiert; und
die Stanzmatrize (10) und die Vielzahl von Zentrierelementen (20) in der Arbeitskammer (31) positioniert sind.

3. Vorrichtung (1) nach Anspruch 2, wobei ferner:
die Stanzmatrize (10) dem unteren Halteelement (30) zugeordnet und um das Halteelement (32) herum angeordnet ist und mithilfe des Aktuators (11) entsprechend dem Halteelement (32) zwischen einer Ruheposition und einer Betriebsposition verfahrbar ist, wobei die Stanzmatrize (10) in der Ruheposition bzw. in der Betriebsposition auf einer geringeren bzw. höheren Höhe gegenüber mindestens eine Haltefläche (33) angeordnet ist;
die Vielzahl von Zentrierelementen (20) dem unteren Halteelement (30) zugeordnet ist;
in der offenen Konfiguration des unteren Halteelements (30) und des oberen Schließelements (40) sich die Vielzahl von Zentrierelementen (20) in der ersten Position entsprechend der Stanzmatrize (10) angeordnet ist und die Stanzmatrize (10) und die Vielzahl von Zentrierelementen (20) gemeinsam entsprechend zum Halteelement (32) zwischen einer hohen Position und einer niedrigen Position entlang der geradlinigen Bewegungsrichtung verfahrbar sind;
in der hohen Position sich die Stanzmatrize (10) in der Betriebsposition und die Vielzahl von Zentrierelementen (20) in einer angehobenen Position entsprechend zu mindestens einer Haltfläche (33) befindet;
in der niedrigen Position sich die Stanzmatrize (10) in der Ruheposition und die Vielzahl von Zentrierelementen (20) in einer abgesenkten Position entsprechend zu mindestens einer Haltfläche (33) befindet; und
in der geschlossenen Konfiguration des unteren Halteelements (30) und des oberen Schließelements (40) die Vielzahl von Zentrierelementen (20) entsprechend zu mindestens einer Haltfläche (33) in einer verriegelten Position positionierbar ist, in der eine Unterseite (41) des oberen Schließelements (40) ein Aufwärtsverstellen der Vielzahl von Zentrierelementen (20) entlang der geradlinigen Bewegungsrichtung während einer Verstellung der Stanzmatrize (10) in Richtung der Betriebsposition verhindert.

4. Vorrichtung (1) nach Anspruch 3, wobei die Vorrichtung (1) ferner so konfiguriert ist, dass sie im Betrieb nacheinander eine Zentrierkonfiguration, eine Aufbringkonfiguration und eine Schnittendkonfiguration einnimmt, wobei:
in der Zentrierkonfiguration sich das untere Halteelement (30) und das obere Schließelement (40) in der offenen Konfiguration befinden und sich die Stanzmatrize (10) sowie die Vielzahl von Zentrierelementen (20) in der oberen Position befinden;
in der Aufbringkonfiguration sich das untere Halteelement (30) und das obere Schließelement (40) in der geschlossenen Konfiguration befinden und sich die Stanzmatrize (10) in der Ruheposition befindet; und
in der Schnittendkonfiguration sich das untere Halteelement (30) und das obere Schließelement (40) in der geschlossenen Konfiguration, die Stanzmatrize (10) in der Betriebsposition und die Vielzahl von Zentrierelementen (20) sich in der verriegelten Position befindet, während die Vielzahl von Zentrierelementen (20) entsprechend der Schneidmatrize (10) von der ersten Position einen gewissen Abstand aufweist;
und ferner:
die Aufbringeinrichtungen zum Aufbringen der Folie (2) auf den Träger (3) im Betrieb aktivierbar sind, wenn sich die Vorrichtung (1) in der Aufbringkonfiguration befindet; und
während eines Wechsels von der Aufbringkonfiguration in die Schnittendkonfiguration die Stanzmatrize (10) eine relative vertikale Verschiebung entsprechend zu der in der verriegelten Position angeordneten Vielzahl von Zentrierelementen (20) ausführt.

5. Vorrichtung (1) nach Anspruch 3 oder 4, wobei:
ein ringförmiger Rahmen (35) des unteren Halteelements (30) eine obere Öffnung (36) eines Hohlraums (37) des unteren Halteelements (30) begrenzt, wobei der Hohlraum (37) so beschaffen ist, dass er den Träger (3) aufnimmt, und Teil der Arbeitskammer (31) ist, wenn sich das untere Halteelement (30) und das obere Schließelement (40) in der geschlossenen Konfiguration befinden, wobei die mindestens eine Haltfläche (33) innerhalb des Hohlraums (37) liegt;
die Unterseite (41) des oberen Schließelements (40) eben und die Arbeitskammer (31) an der Oberseite begrenzt ist, wenn sich das untere Halteelement (30) und das obere Schließelement (40) in der geschlossenen Konfiguration befinden.

6. Vorrichtung (1) nach Anspruch 5, ferner mit einer Positionierungsvorrichtung (50), die dem unteren Halteelement (30) zugeordnet ist, um den Träger (3) im Betrieb auf mindestens einer Haltfläche (33) zu positionieren, wobei:
die Positionierungsvorrichtung (50) eine obere Betriebsfläche (51) aufweist und, wenn sich das untere Halteelement (30) und das obere Schließelement (40) in der offenen Konfiguration befinden, die Positionierungsvorrichtung (50) entsprechend zu mindestens einer Haltfläche (33) zwischen einer entfernteren Position und einer näheren Position verfahrbar ist;
in der entfernteren Position die obere Betriebsfläche (51) an der oberen Öffnung (36) liegt oder sich außerhalb des Hohlraums (37) befindet, um im Betrieb den Träger (3) aufzunehmen; und
in der näheren Position die obere Betriebsfläche (51) an mindestens einer Haltfläche (33) liegt, um im Betrieb den Träger (3) auf mindestens einer Haltfläche (33) freizugeben.

7. Vorrichtung (1) nach Anspruch 6, ferner mit einer Zufuhrvorrichtung (60) zum Zuführen eines Trägers (3) auf die in der entfernteren Position angeordnete Positionierungsvorrichtung (50) im Betrieb, wobei:
die Zufuhrvorrichtung (60) eine Vielzahl von Betriebswänden (61) umfasst;
die Zufuhrvorrichtung (60) zwischen einer Aufnahmeposition, in der sich die Vielzahl von Betriebswänden (61) an einer Aufnahmestation (70) zum Aufnehmen des Trägers (3) im Betrieb befindet, und einer Freigabeposition, in der sich die Vielzahl von Betriebswänden (61) am unteren Halteelement (30) zum Freigeben des Trägers (3) auf der Positionierungsvorrichtung (50) im Betrieb befindet, verfahrbar ist;
die Betriebswände der Vielzahl von Betriebswänden (61) zwischen einer Arbeitsposition, in der sie einander zugewandt sind und seitlich in einem Begrenzungsraum (62) abschließen, in dem sie im Betrieb den Träger (3) seitlich begrenzen, und einer Ruheposition verfahrbar sind;
wenn sich das untere Halteelement (30) und das obere Schließelement (40) in der offenen Konfiguration befinden und sich die Zufuhrvorrichtung (60) in der Freigabeposition befindet, die in der Arbeitsposition angeordnete Vielzahl von Betriebswänden (61) oberhalb der oberen Öffnung (36) des Hohlraums (37) liegt.

8. Vorrichtung (1) nach Anspruch 7, wobei:
in der angehobenen Position und in der abgesenkten Position der Vielzahl von Zentrierelementen (20) ein oberer Abschnitt (24) jedes Zentrierelements (20) der Vielzahl von Zentrierelementen (20) jeweils auf einer höheren bzw. geringeren Höhe angeordnet ist als die maximale Höhe, die durch die obere Betriebsfläche (51) der Positionierungsvorrichtung (50) erreichbar ist;
wenn sich die Vielzahl von Zentrierelementen (20) in der angehobenen Position befindet, während sich die Zufuhrvorrichtung (60) in der Freigabeposition und die Vielzahl von Betriebswänden (61) in der Arbeitsposition befinden, sind die oberen Abschnitte (24) seitlich um den von der Vielzahl von Betriebswänden (61) begrenzten Begrenzungsraum (62) herum angeordnet.

9. Vorrichtung (1) nach Anspruch 8, wobei:
die Vielzahl von Betriebswänden (61) eine Vielzahl von Aufnahmesitzen (66) definiert;
wenn sich die Vielzahl von Zentrierelementen (20) in der angehobenen Position befindet, während sich die Zufuhrvorrichtung (60) in der Freigabeposition und die Vielzahl von Betriebswänden (61) in der Arbeitsposition befindet, ist die Vielzahl von Zentrierelementen (20) in die Vielzahl von Aufnahmesitzen (66) eingesetzt.

10. Vorrichtung (1) nach Anspruch 9, wobei, wenn sich die Zufuhrvorrichtung (60) in der Freigabeposition befindet und sich die Vielzahl von Betriebswänden (61) in der Arbeitsposition befindet, die Aufnahmesitze (66) zum Begrenzungsraum (62) hin offen sind.

11. Vorrichtung (1) nach Anspruch 9 oder 10, wobei, wenn sich die Zufuhrvorrichtung (60) in der Freigabeposition befindet, während sich die Vielzahl von Betriebswänden (61) in der Arbeitsposition und die Vielzahl von Zentrierelementen (20) in der angehobenen Position befinden, das Verstellen der Vielzahl von Betriebswänden (61) aus der Arbeitsposition in die Ruhestellung bewirkt, dass die Vielzahl von Zentrierelementen (20) aus der Vielzahl von Aufnahmesitzen (66) herausbewegt wird.

12. Vorrichtung (1) nach einem der Ansprüche 1 bis 11, wobei jedes Zentrierelement (20) eine Hauptverlängerungsachse aufweist, die parallel zur relativen geradlinigen Verschiebungsrichtung verläuft.

13. Vorrichtung (1) nach einem der Ansprüche 1 bis 12, wobei die Zentrierelemente (20) der Vielzahl von Zentrierelementen (20) einstückig miteinander verbunden sind.

14. Vorrichtung (1) nach einem der Ansprüche 1 bis 13, wobei die Stanzmatrize (10) einstückig mit einem mit dem Aktuator (11) gekoppelten Verbindungselement (16) verbunden ist, und wobei das eine oder mehrere elastische Elemente (15) zwischen der Vielzahl von Zentrierelementen (20) und besagtem Verbindungselement (16) angeordnet sind.

15. Vorrichtung (1) nach einem der Ansprüche 1 bis 14, wobei die Vorrichtung (1) konfiguriert ist zum:
Auskleiden des Trägers (3) mit der Folie (2), um eine Schale herzustellen; oder
Verpacken eines auf dem Träger (3) angeordneten Produkts (4), um eine Verpackung herzustellen, in der das Produkt (4) zwischen dem als Schale dienenden Träger (3) und der Folie (2) eingeschlossen ist.

## Revendications

1. Un appareil (1) pour appliquer un film (2) sur un support (3), comprenant une matrice de découpe (10) pour découper le film (2), une pluralité d'éléments de centrage (20) pour centrer le support (3) dans la matrice de découpe (10) et un actionneur (11), dans lequel l'actionneur (11) est relié à la matrice de découpe (10) et la matrice de découpe (10) peut être déplacée au moyen de l'actionneur (11) le long d'une ligne droite de mouvement qui est verticale, **caractérisé en ce que** :
la pluralité d'éléments de centrage (20) est disposée autour de la matrice de découpe (10) et est assujettie de façon coulissante à la matrice de découpe (10) entre une première position et une deuxième position le long d'une ligne droite de translation relative qui est parallèle à la ligne droite de mouvement de la matrice de découpe (10) ;
un ou plusieurs éléments élastiques (15) sont interposés entre la pluralité d'éléments de centrage (20) et la matrice de découpe (10) pour pousser la pluralité d'éléments de centrage (20) vers la première position ; et
la pluralité d'éléments de centrage (20) peut être déplacée avec la matrice de découpe (10) au moyen de l'actionneur (11) le long de la ligne droite de mouvement.

2. L'appareil (1) selon la revendication 1, comprenant en outre un organe de support inférieur (30), un organe de fermeture supérieur (40) et des moyens d'application pour appliquer, en utilisation, le film (2) sur le support (3), dans lequel :
l'organe de support inférieur (30) et l'organe de fermeture supérieur (40) sont mobiles l'un par rapport à l'autre entre une configuration ouverte, dans laquelle ils sont désaccouplés, et une configuration fermée, dans laquelle ils sont accouplés et délimitent, entre eux, une chambre de travail (31) ;
l'organe de support inférieur (30) comprend un élément de support (32) qui définit au moins une surface de support (33) pour supporter, en utilisation, le support (3) pendant l'application du film (2) à l'intérieur de la chambre de travail (31) ; et
la matrice de découpe (10) et la pluralité d'éléments de centrage (20) sont positionnées dans la chambre de travail (31).

3. L'appareil (1) selon la revendication 2, dans lequel, en outre :
la matrice de découpe (10) est associée à l'organe de support inférieur (30), est disposée autour de l'élément de support (32) et peut être déplacée, par rapport à l'élément de support (32), entre une position non opérationnelle et une position opérationnelle par le biais de l'actionneur (11), la matrice de découpe (10) étant placée, lorsqu'elle se trouve respectivement dans la position non opérationnelle et dans la position opérationnelle, respectivement à une hauteur inférieure et à une hauteur supérieure par rapport à ladite au moins une surface de support (33) ;
la pluralité d'éléments de centrage (20) est associée à l'organe de support inférieur (30) ;
dans la configuration ouverte de l'organe de support inférieur (30) et de l'organe de fermeture supérieur (40), la pluralité d'éléments de centrage (20) est dans la première position par rapport à la matrice de découpe (10), et la matrice de découpe (10) et la pluralité d'éléments de centrage (20) peuvent être déplacées ensemble, par rapport à l'élément de support (32), entre une position haute et une position basse le long de la ligne droite de mouvement ;
dans la position haute, la matrice de découpe (10) est dans la position opérationnelle et la pluralité d'éléments de centrage (20) est dans une position élevée par rapport à ladite au moins une surface de support (33) ;
dans la position basse, la matrice de découpe (10) est dans la position non opérationnelle et la pluralité d'éléments de centrage (20) est dans une position abaissée par rapport à ladite au moins une surface de support (33) ; et
dans la configuration fermée de l'organe de support inférieur (30) et de l'organe de fermeture supérieur (40), la pluralité d'éléments de centrage (20) peut être positionnée, par rapport à ladite au moins une surface de support (33), dans une position de blocage dans laquelle une surface inférieure (41) de l'organe de fermeture supérieur (40) empêche un déplacement vers le haut, le long de la ligne droite de mouvement, de la pluralité d'éléments de centrage (20) pendant un déplacement de la matrice de découpe (10) vers la position opérationnelle.

4. L'appareil (1) selon la revendication 3, dans lequel l'appareil (1) est en outre configuré pour prendre en séquence, en utilisation, une configuration de centrage, une configuration d'application et une configuration de fin de découpe, dans lequel :
dans la configuration de centrage, l'organe de support inférieur (30) et l'organe de fermeture supérieur (40) sont dans la configuration ouverte et la matrice de découpe (10) et la pluralité d'éléments de centrage (20) sont dans la position haute ;
dans la configuration d'application, l'organe de support inférieur (30) et l'organe de fermeture supérieur (40) sont dans la configuration fermée et la matrice de découpe (10) est dans la position non opérationnelle ; et
dans la configuration de fin de découpe, l'organe de support inférieur (30) et l'organe de fermeture supérieur (40) sont dans la configuration fermée, la matrice de découpe (10) est dans la position opérationnelle, la pluralité d'éléments de centrage (20) est dans la position de blocage et, par rapport à la matrice de découpe (10), la pluralité d'éléments de centrage (20) est espacée de la première position ;
et dans lequel, en outre :
les moyens d'application sont activables pour appliquer, en utilisation, le film (2) sur le support (3) lorsque l'appareil (1) est dans la configuration d'application ; et
lors d'une commutation de la configuration d'application à la configuration de fin de découpe, la matrice de découpe (10) effectue une translation verticale relative par rapport à la pluralité d'éléments de centrage (20) placée dans la position de blocage.

5. L'appareil (1) selon la revendication 3 ou 4, dans lequel :
un cadre annulaire (35) de l'organe de support inférieur (30) délimite une ouverture supérieure (36) d'une cavité (37) de l'organe de support inférieur (30), ladite cavité (37) étant configurée pour loger le support (3) et faisant partie de la chambre de travail (31) lorsque l'organe de support inférieur (30) et l'organe de fermeture supérieur (40) sont dans la configuration fermée, ladite au moins une surface de support (33) étant à l'intérieur de ladite cavité (37) ;
la surface inférieure (41) de l'organe de fermeture supérieur (40) est plate et délimite la chambre de travail (31) sur le dessus lorsque l'organe de support inférieur (30) et l'organe de fermeture supérieur (40) sont dans la configuration fermée.

6. L'appareil (1) selon la revendication 5, comprenant en outre un dispositif de positionnement (50) associé à l'organe de support inférieur (30) pour positionner, en utilisation, le support (3) sur ladite au moins une surface de support (33), dans lequel :
le dispositif de positionnement (50) a une surface opérationnelle supérieure (51) et, lorsque l'organe de support inférieur (30) et l'organe de fermeture supérieur (40) sont dans la configuration ouverte, le dispositif de positionnement (50) est mobile par rapport à ladite au moins une surface de support (33) entre une position éloignée et une position rapprochée ;
dans la position éloignée, la surface opérationnelle supérieure (51) est au niveau de l'ouverture supérieure (36) ou est à l'extérieur de la cavité (37) pour recevoir, en utilisation, le support (3) ; et
dans la position rapprochée, la surface opérationnelle supérieure (51) est au niveau de ladite au moins une surface de support (33) pour relâcher, en utilisation, le support (3) sur ladite au moins une surface de support (33).

7. L'appareil (1) selon la revendication 6, comprenant en outre un dispositif d'alimentation (60) pour alimenter, en utilisation, un support (3) sur le dispositif de positionnement (50) placé dans la position éloignée, dans lequel :
le dispositif d'alimentation (60) comprend une pluralité de parois opérationnelles (61) ;
le dispositif d'alimentation (60) est mobile entre une position de prélèvement, dans laquelle la pluralité de parois opérationnelles (61) est au niveau d'une station de prélèvement (70) pour prélever, en utilisation, le support (3), et une position de relâche, dans laquelle la pluralité de parois opérationnelles (61) est au niveau de l'organe de support inférieur (30) pour relâcher, en utilisation, le support (3) sur le dispositif de positionnement (50) ;
les parois opérationnelles de la pluralité de parois opérationnelles (61) sont mobiles entre une position de travail, dans laquelle elles sont face à face et délimitent latéralement un espace de confinement (62) dans lequel, en utilisation, elles confinent latéralement le support (3), et une position de repos ;
lorsque l'organe de support inférieur (30) et l'organe de fermeture supérieur (40) sont dans la configuration ouverte et le dispositif d'alimentation (60) est dans la position de relâche, la pluralité de parois opérationnelles (61) placée dans la position de travail est au-dessus de l'ouverture supérieure (36) de la cavité (37).

8. L'appareil (1) selon la revendication 7, dans lequel :
dans la position élevée et dans la position abaissée de la pluralité d'éléments de centrage (20), une portion de dessus (24) de chaque élément de centrage (20) de la pluralité d'éléments de centrage (20) est placée, respectivement, à une plus grande hauteur et à une plus petite hauteur que la hauteur maximale pouvant être atteinte par la surface opérationnelle supérieure (51) du dispositif de positionnement (50) ;
lorsque la pluralité d'éléments de centrage (20) est dans la position élevée avec le dispositif d'alimentation (60) dans la position de relâche et la pluralité de parois opérationnelles (61) dans la position de travail, les portions de dessus (24) sont disposées latéralement autour de l'espace de confinement (62) délimité par la pluralité de parois opérationnelles (61).

9. L'appareil (1) selon la revendication 8, dans lequel :
la pluralité de parois opérationnelles (61) définit une pluralité de sièges de réception (66) ;
lorsque la pluralité d'éléments de centrage (20) est dans la position élevée avec le dispositif d'alimentation (60) dans la position de relâche et la pluralité de parois opérationnelles (61) dans la position de travail, la pluralité d'éléments de centrage (20) est insérée dans la pluralité de sièges de réception (66).

10. L'appareil (1) selon la revendication 9, dans lequel, lorsque le dispositif d'alimentation (60) est dans la position de relâche et la pluralité de parois opérationnelles (61) est dans la position de travail, les sièges de réception (66) sont ouverts vers l'espace de confinement (62).

11. L'appareil (1) selon la revendication 9 ou 10, dans lequel, lorsque le dispositif d'alimentation (60) est dans la position de relâche avec la pluralité de parois opérationnelles (61) dans la position de travail et la pluralité d'éléments de centrage (20) dans la position élevée, le déplacement de la pluralité de parois opérationnelles (61) de la position de travail à la position de repos entraîne la pluralité d'éléments de centrage (20) à sortir de la pluralité de sièges de réception (66).

12. L'appareil (1) selon l'une quelconque des revendications de 1 à 11, dans lequel chaque élément de centrage (20) a une ligne d'extension principale qui est parallèle à la ligne droite de translation relative.

13. L'appareil (1) selon l'une quelconque des revendications de 1 à 12, dans lequel les éléments de centrage (20) de la pluralité d'éléments de centrage (20) sont solidairement assujettis entre eux.

14. L'appareil (1) selon l'une quelconque des revendications de 1 à 13, dans lequel la matrice de découpe (10) est solidairement assujettie à un élément de liaison (16) couplé avec l'actionneur (11), et dans lequel lesdits un ou plusieurs éléments élastiques (15) sont placés entre la pluralité d'éléments de centrage (20) et ledit élément de liaison (16).

15. L'appareil (1) selon l'une quelconque des revendications de 1 à 14, dans lequel l'appareil (1) est configuré pour :
revêtir le support (3) avec le film (2) afin d'obtenir un plateau ; ou
emballer un produit (4) placé sur le support (3) afin d'obtenir un emballage dans lequel le produit (4) est enfermé entre le support (3) qui sert de plateau et le film (2).
